# EUROPEAN PATENT APPLICATION

(11) **EP 4 563 970 A1**
(43) Date of publication of application: **04.06.2025**
(21) Application number: 24306923.4
(22) Date of filing: 18.11.2024
(51) Int. Cl.: G01N 1/28, G01N 1/06

(54) **CABLE PEELING BASED AUTOMATED ELECTRICAL CHARACTERISATION AND QUALITY CONTROL SYTEM**

(30) Priority: 29.11.2023 NO 20231296
(71) Applicant: Nexans, 92400 Courbevoie (FR)
(72) Inventor: DOEDENS, Espen, 92400 COURBEVOIE (FR); JARVID, Erik Markus, 92400 COURBEVOIE (FR)
(74) Representative: Onsagers AS

(57) **Abstract**

The present invention relates to a method of peeling a cable specimen (10), which method comprises the steps of holding the cable specimen (10) by at least three rollers (11) being arranged in a roller plane (12); by a drive unit (21), causing rotation of the cable specimen (10); by a drift unit (15), moving a knife (13) along a path towards the rotation axis of the cable specimen (10), which path is outside the roller plane (12); wherein the drive unit(21) and the drift unit (15) communicate with one another. The present invention also relates to a device performing the method according to the invention.

## Description

### FIELD OF THE INVENTION

The present invention relates to a method of peeling a cable specimen, which method comprises the steps of holding the cable specimen by at least three rollers being arranged in a roller plane; by a drive unit, causing rotation of the cable specimen; by a drift unit, moving a knife along a path towards the rotation axis of the cable specimen, which path is outside the roller plane; wherein the drive unit and the drift unit communicate with one another. The present invention also relates to a device performing the method according to the invention.

### BACKGROUND

High-voltage electric power transmission systems have become of increased significance in the energy transition as these systems enable long distance energy connections which could help to deal with the fluctuations of wind power and photovoltaics.

High voltage cables typically comprise a central electrical conductor, mostly aluminum or copper, and successively and coaxially around this electrical conductor, a semiconductive inner layer, an electrically insulating intermediate layer, a semiconducting outer layer. These layers are based on polymer(s), which can be crosslinked or not.

A key factor for high voltage cables concerns the insulating material surrounding the metal conductor in the center of the cable. Considerable research and development efforts have been spent to improve the insulating material. In the course of these efforts it requires to analyze samples of the insulating material. The aim is to investigate cable health which may vary with the radial, longitudinal and angular location in the cable insulation. For example, electrical measurements on the full cable sample require long segments of cable and are thus costly and may not resolve the spatial variations. The preparation of samples of distinguishing spatial positions within the insulating material of the cable is time consuming and elaborate.

In one approach a re-melting of segments of cable insulation into plates have been performed. However, firstly the method can only be performed with non-XLPE insulating materials as the cross-linked insulating materials cannot be remelted, secondly the melting affects morphological insulation properties. Typically, such methods are performed with virgin pellet materials. However, the method allows no approach in investigating cable health. Cutting peelings and thin parts from the full samples is thus preferred, as it only requires short cable segments and provides spatial resolution. The main alternatives to peelings are e.g. slicing or CNC milling which however results in much thicker specimens. Samples can further be obtained by microtomy, where one receives very small samples, which are not distributed around the cable.

There is a need for methods which enable to receive a high number of samples or alternatively a long peeling sample. Further, there is a need of improving the characteristics of the samples in terms of unity of thickness and other properties. There is further a need for increasing the degree of automatization of receiving samples from a high voltage cable.

Problems solved by the invention relate to the provision of a device and a method addressing and fulfilling the above formulated needs. In particular, a problem solved by the invention relates to the provision of a method which enables the production of full cable sample. The sample should have a unified thickness. The degree of automatization should be increased. Further, the method should allow to precisely link between a spot on the sample to the spatial position in the high voltage cables. Also, a problem solved by the invention relates to the provision of a device enabled to perform the method. The device should exhibit a high degree of automatization.

### SUMMARY OF THE INVENTION

The invention's underlying problems are solved by the subject-matter of claim 1. A first aspect of the invention therefore relates to a method of peeling a cable specimen, which method comprises the steps of
- holding the cable specimen by at least three rollers being arranged in a roller plane,
- by a drive unit, causing rotation of the cable specimen,
- by a drift unit, moving a knife along a path towards the rotation axis of the cable specimen, which path is outside the roller plane,
wherein the drive unit and the drift unit communicate with one another.

The method refers to a peeling of a cable specimen which can be performed by rotating the cable specimen along its longitudinal axis. The rotation can be performed by a motor being part of a drive unit and causing the rotation.

For holding the cable specimen, a minimum of three rollers are required. By the three rollers, the cable is hold in place. This is because, there are three points required to hold a two-dimensional object tight in place. The term "roller" is to be understood in a broad sense: Any gadget enabling an easy sliding of the cable when rotating is assumed to be a roller. The at least three rollers may e.g. be a ball bearing. In that case, the balls of the ball bearing represent the at least three rollers. The rollers are arranged such that notional lines between each of the three rollers form a triangle being a notional plane. This notional plane is designated the roller plane. The cable is essentially perpendicular to this plane. The method applies a step by a drift unit which comprises a knife. The knife may cut the insulating material of the cable which thus produces the peeling sample. The drift unit is arranged such that it moves a path towards the rotation axis of the cable specimen. It is essential that the path is outside the roller plane. If the path was in the roller plane, the knife would cut the insulating material at a spatial position were the rollers move in relation to the cable. The rollers would then approach to the center of the cable specimen or the rollers would lose contact to the cable specimen. If the drift unit is arranged such that the rollers will neither approach the center of the cable specimen nor lose contact to the cable in the course of the cutting, the drift unit is in fact arranged outside the roller plane.

The drift unit enables the linear propulsion of the knife in the direction towards the cable center, i.e. the rotation axis. The path of the drift unit may follow a straight line or the drift unit may follow a curved line. This may depend on the angle the knife approached towards the center of the cable specimen.

It is essential for the invention that the drive unit communicates with the drift unit. The term "communicate" is to be understood in its physical meaning. The term is known from physics ("communicating vessels"). The term leaves open, if the drive unit communicates with the drift unit by means of an electrical control (i.e. driving a motor for rotating the cable specimen and depending thereon moving the knife by a second motor), or by mechanical means.

It is essential that the cable is caused to rotation. The cable is held by three rollers. In one aspect, the cable is caused to rotate in a lathe while being hold by three rollers.

The method results in obtaining a peeling sample. Thus, according to a preferred method, the method comprises the step of obtaining a peeling sample.

In one aspect, the drift unit is devoid of a propulsion except for a propulsion induced by the drive unit.

The beneficial effect associated with the method of the invention refers to the option that only one kind of propulsion is necessary while at the same time the precision of the peeling is enhanced. By synchronizing the rotation with the cutting, a more uniform thickness of the peeling can be achieved.

In one aspect, the drive unit and the drift unit mechanically communicate with one another. It is more preferred that the drive unit mechanically communicates with the drift unit.

According to this preferred method, the drive unit rotates the cable and depending on that rotation, particularly speed of rotation, the drift unit is mechanically caused to moves forward.

In one aspect, the drive unit comprises a motor impelling the cable specimen to the rotation. The impelling of the cable means that the cable is caused to the movement of rotation. The motor effects that the cable rotates, i.e. essentially turns around its longitudinal rotation axis. The motor causes the rotation of the cable specimen.

In one aspect, impelling the cable specimen to the rotation causes the drift unit to perform the step of moving the knife along the path towards the rotation axis of the cable specimen.

This preferred method uses a motor for causing the cable specimen to rotate which again causes the drift unit to perform the step of moving. The motor drives both the rotation of the cable specimen and the longitudinal movement of the drift unit.

In one aspect, the drive unit and the drift unit mechanically communicate with one another in that the rotation of the cable specimen induces a force transmission to a worm gear comprising a worm thread having fixed thereon the knife, wherein the force transmission induces the step of moving the knife.

In one aspect, the drive unit and the drift unit mechanically communicate with one another in that the drive unit causes the rotation of the cable specimen and the drive unit induces a force transmission to a worm gear comprising a worm thread having fixed thereon the knife, wherein the force transmission induces the step of moving the knife.

The use of the worm gear is associated with the beneficial effect that the thickness of the obtained peeling sample can be adjusted in a stepwise manner.

In one aspect, the rotation of the cable specimen is related to a force transmission via a surface speed measurement device arranged on the surface of the cable specimen.

In this preferred method, the force transmission from the drive unit to the drift unit is performed in a specific manner. The term "arranged on the surface of the cable specimen" means that there is a non-slidable contact between the surface of the rotating cable specimen and the surface of the roller.

In one aspect, the worm gear has a worm gear ratio of between 2:1 to 1:32, preferably 1:1, 1:2, 1:4, 1:8 or 1:16 and a thread pitch of the worm of 0.5 to 5 mm.

By setting the worm gear ratio, it is possible to adjust the speed of the drift unit in relation to the speed of rotation of the cable specimen. Typically, the worm thread rotates slower than the cable specimen, but all ratios between 2:1 to 1:32, or even more, can be reasonable depending on the thread pitch of the worm. The rations are determined between the cable rotation and the knob of the in built tool. In case of the 1:32 worm gear ratio, the worm rotates one time each 32 full cable rotations. The rotation of the worm makes the knife move forward. The extend of the movement in the forward direction depends on the thread pitch, which is the knife feed rate per its rotation. According to the preferred aspect, the thread pitch of the worm is 0.5 to 5 mm, which means that the worm moves forward 0.5 to 5 mm when the worm turns one time; in other words, the thread pitch is 0.5 to 5 mm per turn of the thread pitch.

In one aspect, the step of holding the cable specimen comprises further clamping the cable specimen between one or two lathe chucks. The preferred method enables a tight fastening of the cable specimen.
In one aspect, the method further comprises the steps of
- obtaining a peeling sample,
- spooling the peeling sample onto a collector roll,
wherein the collector roll exerts a constant pulling force to the peeling sample when spooling the peeling sample onto the collector roll.

In the preferred method, the obtained peeling sample assembled on a collector roll. The constant pulling force exerted by the collector roll ensures that the peeling sample is not over-stretched, but tight wrapped on the collector roll. In fact, it is slightly stretched so it is neatly and stably removed such that it comes away from the knife. This yields a more stable cutting process having an influence on an improved uniform thickness.

In one aspect, the step of spooling is performed by force transmission from the drive unit to the collector roll. It is beneficial to have only one unit for propulsion of all moving parts when applying the method.

In order to perform this preferred method, there can be arranged a further roller that has a force transmission for rolling up the material that is peeled off. This arrangement can be configured such that a constant tension is kept on the peeled sample during the cutting.

In one aspect, the step of spooling is performed by force transmission from the drive unit to the collector roll applying a torque limiter coupling.

The application of the torque limiter ensures that the pulling force to the peeling sample is constant.

In one aspect, the method further comprises the step of stopping the method before the knife comes into contact with the cable conductor of the cable specimen.

This preferred method provides an increased degree of automatization.
In one aspect, the method further comprises the steps of
- providing a marking on the cable specimen being detectable on the peeling sample,
- detecting the marking on the peeling sample and thereby allocating a position of the peeling sample to the corresponding spatial position in the cable specimen.

The preferred method enables a mapping of every spot on the peeling sample to a spatial position in the cable material. The making can be produced by drilling a hole in the direction of the center of the electric cable. When performing the peeling of the cable, the marking is visible on the obtained peeling sample. When counting the markings in the lengthwise direction of the cable, one may link the position of the peeling sample to the spatial position in the cable. The hole can be drilled or hot stamped on the side so that it becomes a notch on the peeling, or in the middle.

The invention's underlying problems are further solved by the subject-matter of claim 13. A second aspect of the invention therefore relates to a device for peeling a cable specimen, wherein the device comprises at least three rollers for holding the cable specimen which rollers being arranged in a roller plane, a drive unit with a motor for causing rotation of the cable specimen, a drift unit comprising a knife, which drift unit enables moving a knife along a path towards the rotation axis of the cable specimen, which path is outside the roller plane, wherein a device unit enables communication between the drive unit and the drift unit.

The device enables performing the method according to the invention. A core issue refers to the movement of the drift unit which is based on device features enabling a communication between the drive unit and the drift unit. Preferably, the device unit is a force transmission unit.

In one aspect, the device unit enables communication between the drive unit and the drift unit by enablement of the transmission of a force from the drive unit to the drift unit. There are thus mechanical means causing the drift unit to perform movement based on the action of the drive unit.

In one aspect, the drift unit comprises a worm gear with a worm thread having the knife fixed thereon. By the worm thread, the knife is subjected to a propulsion in a linear direction. The feature according to which the knife is fixed on a worm thread does not necessarily mean that the knife is immediately attached to the worm thread. Instead there might be further components in between, particularly components simplifying an exchange of the knife by another one. The exchange may become due for maintenance reasons. Thus, in one aspect, the knife is fixed on the worm thread in a detachable manner.

In one aspect, the knife has a width of 10 to 100 mm. The knife width is predominantly chosen in that regime because peeling samples are most useful having such widths.

In one aspect, the roller plane and the knife are arranged in a distance between 2 and 20 cm. It is favorable to arrange the knife as close as possible to the roller plan without cutting the surface of the cable specimen where the rollers move on the surface of the roller plane.

In one aspect, the device comprises six rollers, wherein three rollers are arranged in a first roller plane and further three rollers are arranged in a second roller plane, wherein the drift unit is arranged between the first roller plane and the second roller plane.

The preferred method enables a tight fasting of the cable specimen by use of six rollers arranged as two times three rollers.

In one aspect, the device further comprises one or two lathe chucks for clamping the cable specimen. The preferred method enables a tight fastening of the cable specimen.

The invention's underlying problems are further solved by a third aspect of the invention which relates to a method of peeling a cable specimen, which method comprises
- holding the cable specimen by at least three rollers being arranged in a roller plane,
- arranging a knife in the roller plane on the surface of the cable specimen in a distance to a first roller of the at least three rollers,
- setting the distance between the first roller and the knife to a fixed distance,
- performing rotation of the cable specimen.

The peeling of the cable specimen is performed by a knife being arranged in a set distance to one of the rollers. The step of setting the distance between the first roller and the knife determines the thickness of the obtained peeling sample.

In that the knife is arranged in the roller plane, the cable becomes thinner while performing the rotation of the cable specimen. The rollers thus approach to one another. The roller is preferably connected to a spring or other force exerting device for moving the roller inwards. More preferred all three rollers are connected to a spring or other force exerting device for moving the rollers inwards.

Preferred features being disclosed in context of the first aspect of the invention represent preferred features of the third aspect of the invention.

The invention's underlying problems are further solved by a fourth aspect of the invention which relates to a device for peeling a cable specimen, wherein the device comprises at least three rollers for holding the cable specimen which rollers being arranged in a roller plane, a knife arranged in the roller plane in a set distance to a first roller of the at least three rollers, and a motor enabling rotation of the cable specimen.

The device enables performing the method according to the fourth aspect of the invention. A core issue refers to the arrangement of the knife in a set distance to one of the three rollers.

As with regard to the second aspect of the invention disclosed above, it is preferred that the device according to the fourth aspect further comprises a collector roll for spooling a peeling sample, wherein the motor enabling rotating of the cable specimen and rotating of the collector roll.

It is further preferred that the device further comprises a torque limiter arranged to the collector roll, which torque limiter enables exerting a constant pulling force to the peeling sample during spooling of the peeling sample onto the collector roll.

The invention's underlying problems are further solved by a fifth aspect of the invention which relates to a method for analyzing the peeling sample of the cable specimen, which method comprises
- spooling the peeling sample from a first roll to a second roll,
- performing measurements with the peeling sample at a spot of the peeling sample while neither being on the first roll nor the second roll, wherein
the measurement comprises at least one of the following: a thickness measurement, an x-ray analysis, an optical measurement, a hyper spectral analysis.

In one aspect, a method is provided which combines the method of peeling the cables, i.e. the method according to the first and third aspect of the present invention, with the method of analyzing the peeling sample, i.e. the method according to the fifth aspect of the invention. Thus, the methods of peeling a cable specimen further comprise the steps for analyzing the peeling sample of the cable specimen, which steps for analyzing comprise
- spooling the obtained peeling sample onto a secondary roll, preferably the collector roll,
- performing measurements with the peeling sample at a spot of the peeling sample while being positioned between the knife and the secondary roll, preferably the collector roll, wherein
the measurement comprises at least one of the following: a thickness measurement, an x-ray analysis, an optical measurement, a hyper spectral analysis.

The methods of analyzing the peeling sample represent in-line methods of analyzing the peeling samples.

In one aspect, the method step of performing measurements is done in-line, in particular in an automated stop-and-go proceedings or in an automated continuous proceedings.

In one aspect, the optical measurement is done with magnification.

In one aspect, the method further comprises a step of coloring the roll, dying the roll or treating the roll with a chemical.

In one aspect, the method further comprises a step of detecting imperfections made used for deciding the positions for electrical tests.

Features being solely disclosed in connection with the method of the invention are deemed to be disclosed in connection with the device of the invention and vice versa.

### BRIEF DESCRIPTION OF THE DRAWING

Certain aspects of the presently disclosed subject-matter will be described with reference to the accompanying drawing, which is representative and schematic in nature and is not be considered to be limiting in any respect as it relates to the scope of the subject-matter disclosed herein:

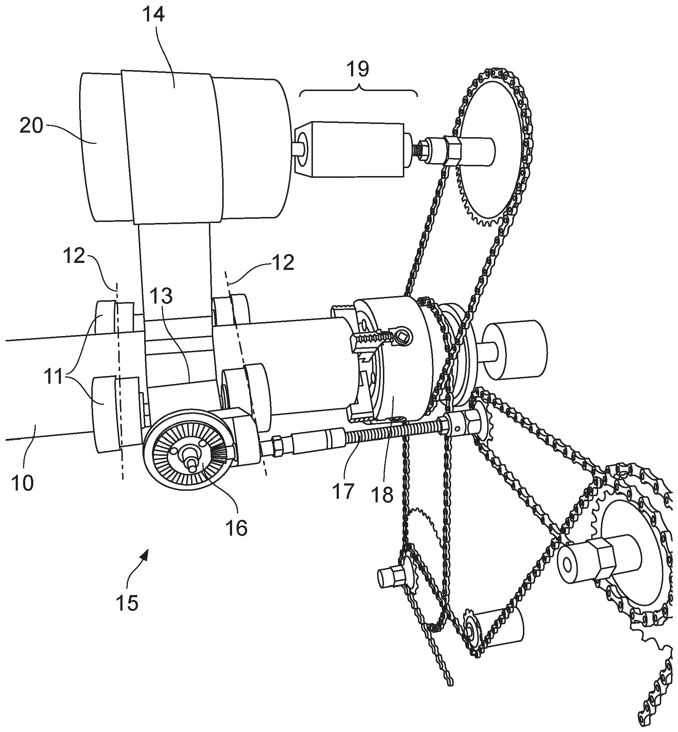

Figure 1 depicts a schematic device according to the present invention.

### DESCRIPTION OF EMBODIMENTS

Figure 1 shows a device for peeling a cable specimen 10. The rollers 11 arranged in a roller plane 12 hold the cable specimen 10. Fig. 1 shows a preferred device in which six rollers 11 are implemented, wherein two rollers are hidden by the cable specimen 10. Accordingly the preferred device shows two roller planes 12. Two lathe chucks 18 (only one of which is shown in Fig. 1) hold the cable specimen 10. A drive unit 21 induces the rotation of the cable specimen 10 and also a force transmission device 17. The drift unit 15 receives an impact via a worm gear 16 from the force transmission device 17 such that the knife 13 cuts the cable specimen 10 and the peeling sample 14 is obtained. The drive unit 21 also impels a shaft causing a collector roll 20 to rotate. The torque limiter 19 causes that the collector roll 20 pulls with a constant force on the obtained peeling sample 14.

### REFERENCE LIST

- 10: Cable specimen
- 11: Rollers
- 12: Roller plane
- 13: Knife
- 14: Peeling sample
- 15: Drift unit
- 16: Worm gear
- 17: Force transmission device
- 18: Lathe chuck
- 19: Torque limiter
- 20: Collector roll
- 21: Drive unit

## Claims

1. A method of peeling a cable specimen (10), which method comprises the steps of
• holding the cable specimen (10) by at least three rollers (11) being arranged in a roller plane (12),
• by a drive unit (21), causing rotation of the cable specimen (10),
• by a drift unit (15), moving a knife (13) along a path towards the rotation axis of the cable specimen (10), which path is outside the roller plane (12),
wherein the drive unit (21) and the drift unit (15) communicate with one another.

2. Method according to claim 1, wherein the drive unit (21) and the drift unit (15) mechanically communicate with one another.

3. Method according to claim 1 or claim 2, wherein the drive unit (21) comprises a motor impelling the cable specimen (10) to the rotation.

4. Method according to claim 3, wherein impelling the cable specimen (10) to the rotation causes the drift unit (15) to perform the step of moving the knife (13) along the path towards the rotation axis of the cable specimen (10).

5. Method according to any one of the preceding claims, wherein the drive unit (21) and the drift unit (15) mechanically communicate with one another in that the rotation of the cable specimen (10) induces a force transmission to a worm gear (16) comprising a worm thread having fixed thereon the knife (13), wherein the force transmission induces the step of moving the knife (13).

6. Method according to claim 5, wherein the worm gear (16) has a worm gear ratio of between 2:1 to 1:32, preferably 1:1, 1:2, 1:4, 1:8 or 1:16 and a thread pitch of the worm of 0.5 to 5 mm.

7. Method according to any one of the preceding claims, wherein the drift unit (15) is devoid of a propulsion except for a propulsion induced by the drive unit (21).

8. Method according to any one of claims 1 to 7, wherein the method further comprises the steps of
• obtaining a peeling sample (14),
• spooling the peeling sample (14) onto a collector roll (20),
wherein the collector roll (20) exerts a constant pulling force to the peeling sample (14) when spooling the peeling sample (14) onto the collector roll (20).

9. Method according to claim 8, wherein the step of spooling is performed by force transmission from the drive unit (21) to the collector roll (20).

10. Method according to claim 8 or claim 9, wherein the step of spooling is performed by force transmission from the drive unit to the collector roll (20) applying a torque limiter coupling.

11. Method according to any one of claims 1 to 10, wherein the method further comprises the step of stopping the method before the knife (13) comes into contact with the cable conductor of the cable specimen (10).

12. Method according to any one of claims 1 to 11, wherein the method further comprises the steps of
• providing a marking on the cable specimen (10) being detectable on the peeling sample (14),
• detecting the marking on the peeling sample (14) and thereby allocating a position of the peeling sample (14) to the corresponding spatial position in the cable specimen (10).

13. Device for peeling a cable specimen (10), wherein the device comprises at least three rollers (11) for holding the cable specimen (10) which rollers (11) are arranged in a roller plane (12), a drive unit (21) with a motor for causing rotation of the cable specimen (10), a drift unit (15) comprising a knife (13), which drift unit (15) enables moving a knife (13) along a path towards the rotation axis of the cable specimen (10), which path is outside the roller plane (12), wherein a device unit enables communication between the drive unit (21) and the drift unit (15).

14. Device according to claim 13, wherein the device unit enables communication between the drive unit (21) and the drift unit (15) by enablement of the transmission of a force from the drive unit (21) to the drift unit (15).

15. Device according to claim 13 or claim 14, wherein the drift unit (15) comprises a worm gear (16) with a worm thread having the knife (13) fixed thereon.

16. Device according to claim 15, wherein the knife (13) is fixed on the worm thread in a detachable manner.

17. Device according to any one of claims 13 to 16, wherein the device comprises six rollers (11), wherein three rollers (11) are arranged in a first roller plane (12) and further three rollers are arranged in a second roller plane, wherein the drift unit (15) is arranged between the first roller plane (12) and the second roller plane.

18. Device according to any one of claims 13 to 17, wherein the device further comprises a collector roll (20) for spooling a peeling sample (14), wherein the motor enables rotating of the cable specimen (10) and rotating of the collector roll (20).

19. Device according to claim 13 or claim 18, wherein the device further comprises a torque limiter (19) arranged to the collector roll (20), which torque limiter (19) enables exerting a constant pulling force to the peeling sample (14) during spooling of the peeling sample (14) onto the collector roll (20).
